# EUROPEAN PATENT APPLICATION

(11) **EP 4 765 439 A1**
(43) Date of publication of application: **24.06.2026**
(21) Application number: 25816201.5
(22) Date of filing: 07.05.2025
(51) Int. Cl.: H01M 50/507, H01M 50/567, H01M 50/59, H01M 50/249

(54) **BATTERY MODULE AND BATTERY PACK AND VEHICLE INCLUDING SAME**

(30) Priority: 31.05.2024 KR 20240071887
(71) Applicant: LG Energy Solution, Ltd., Seoul 07335 (KR)
(72) Inventor: LEE, Joo-Hyoung, Daejeon 34122 (KR); JUNG, Hye-Mi, Daejeon 34122 (KR)
(74) Representative: BCKIP Part mbB
(86) International application number: PCT/KR2025/006113
(87) International publication number: WO 2025/249787

(57) **Abstract**

The present disclosure relates to a battery module including: a plurality of battery cells each having an electrode lead; and a bus-bar assembly including a housing provided on at least one side of the plurality of battery cells, and a bus-bar provided in the housing and configured such that the electrode lead is wound around and coupled to an outer circumferential surface thereof .

## Description

### TECHNICAL FIELD

The present disclosure relates to a battery module, and a battery pack and vehicle including the same and, more specifically, to a battery module having an improved connection between electrode leads, and a battery pack and vehicle including the same.

This application is based on and claims priority from Korean Patent Application No. 10-2024-0071887, filed on May 31, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. Among them, lithium-ion batteries mainly use lithium oxides and carbon materials as positive electrode active materials and negative electrode active materials, respectively. The lithium secondary batteries include an electrode assembly in which positive and negative electrode plates, which are coated with the positive and negative electrode active materials, respectively, are disposed with a separator therebetween, and an exterior case, i.e., a battery case, that stores the electrode assembly with an electrolyte in a sealing manner.

In general, secondary batteries may be classified, depending on the shape of the exterior case, into can-type batteries in which the electrode assembly is stored in a metal can and pouch-type batteries in which the electrode assembly is stored in a pouch of an aluminum laminate sheet.

When a high output voltage is required, multiple battery cells may be connected in series to form a battery module or battery pack. In addition, to increase the charge/discharge capacity, multiple battery cells may be connected in parallel to configure a battery module or battery pack. Accordingly, the number of battery cells included in the battery module or pack may be variously configured depending on the required output voltage or charge/discharge capacity.

In a conventional battery module including a plurality of pouch-type battery cells, a bus-bar frame is provided on at least one side of the battery cells, and the electrode leads are configured to pass through the lead slot of the bus-bar frame and to be bent, thereby making a stack of electrode leads overlapping each other. The stack of electrode leads is coupled to the bus-bar by laser-welding.

In this case, a cutting process for adjusting the length of the electrode lead and a welding process between the electrode leads are added to the manufacturing process of the conventional battery module, which may increase the cost and time for manufacturing the battery module and complicate the process. In addition, the bus-bar made of a conductive material has a wide area exposed to the outside, causing a short circuit.

Therefore, it is necessary to develop a battery module structure capable of reducing cost and time by omitting some processes during the process of coupling the bus-bar and the electrode lead, and preventing short circuits.

### DISCLOSURE

### Technical Problem

The present disclosure is designed to solve the problems of the related art, and therefore the present disclosure is directed to providing a battery module capable of simplifying the coupling structure between the electrode lead of the battery cell and the bus-bar, thereby reducing the cost and time required for manufacturing the battery module and improving productivity.

In addition, the present disclosure is also to provide a battery pack and vehicle including such a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells each having an electrode lead; and a bus-bar assembly including a housing provided on at least one side of the plurality of battery cells, and a bus-bar provided in the housing and configured such that the electrode lead is wound around and coupled to an outer circumferential surface thereof.

The electrode lead may be configured to wrap around the outer circumferential surface of the bus-bar at least once.

The housing may have a storage space formed to store the bus-bar.

The bus-bar may be configured in a shape of a column extending in a widthwise direction of the electrode lead.

The bus-bar may have a contact part to which the electrode lead is coupled, and a shaft part extending from the contact part and configured to be coupled to the housing.

The bus-bar may be configured to be rotatable.

The bus-bar may be configured such that an end of the electrode lead is fixed thereto.

The battery module may further include a filler configured to be filled in the storage space of the housing.

A plurality of housings may be provided to be arranged along a stacking direction of the plurality of battery cells.

The plurality of housings may be configured to be fastened to each other.

In another aspect of the present disclosure, there is provided a battery pack including a battery module according to an embodiment of the present disclosure.

In another aspect of the present disclosure, there is provided a vehicle including a battery module according to an embodiment of the present disclosure or a battery pack according to the present disclosure.

In another aspect of the present disclosure, there is provided a bus-bar assembly configured to be electrically connected to an electrode lead of a battery cell, which may include: a housing; and a bus-bar provided in the housing and having the electrode lead wound around and coupled to an outer circumferential surface thereof.

### Advantageous Effects

According to one aspect of the present disclosure, since a cutting process for adjusting the lengths of the electrode leads and a welding process are omitted when connecting the electrode leads of the battery cell to the bus-bar, the process can be simplified. Therefore, cost and time can be reduced and productivity can be improved in manufacturing the battery module.

In addition, according to another aspect of the present disclosure, since the area where the bus-bar is exposed to the outside is minimized, it is possible to suppress short circuits.

In addition, according to another aspect of the present disclosure, since space is secured on the side where the bus-bar assembly is provided, space utilization inside the module case can be increased. Accordingly, the energy efficiency of the battery module can be maximized.

In addition, according to another aspect of the present disclosure, since the space between the electrode leads of the battery cell is filled, high-temperature gas or flames generated from the battery cell in an abnormal situation of the battery cell may be prevented from being discharged to the electrode leads of the battery cell, thereby preventing adjacent battery cells from being thermally damaged. In particular, according to this aspect of the present disclosure, it is possible to effectively prevent or delay thermal runaway propagation between the battery cells.

That is, according to another aspect of the present disclosure, it is possible to prevent or delay the venting gas from being discharged toward the electrode leads of the battery cell by dispersing the pressure of venting gas concentrated around the electrode leads of the battery cell during the degradation process of the battery cell.

Therefore, in this case, the safety and reliability of the battery module including a plurality of battery cells can be ensured.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of a battery module according to an embodiment of the present disclosure.
FIG. 3 is a drawing illustrating a bus-bar assembly to which electrode leads are coupled in a battery module according to an embodiment of the present disclosure.
FIG. 4 is a cross-sectional view of a bus-bar assembly to which electrode leads are coupled in a battery module according to an embodiment of the present disclosure.
FIG. 5 is a cross-sectional view of a bus-bar assembly to which electrode leads are coupled in a battery module according to another embodiment of the present disclosure.
FIG. 6 is a cross-sectional view of a bus-bar assembly to which electrode leads are coupled in a battery module according to another embodiment of the present disclosure.
FIG. 7 is an exploded perspective view of a bus-bar assembly according to an embodiment of the present disclosure.
FIG. 8 is a cross-sectional perspective view of a bus-bar assembly according to an embodiment of the present disclosure.
FIG. 9 is a cross-sectional view of a bus-bar assembly according to another embodiment of the present disclosure.
FIG. 10 is a drawing illustrating an embodiment in which an electrode lead is wound around a bus-bar assembly according to an embodiment of the present disclosure.
FIG. 11 is a drawing illustrating another embodiment in which an electrode lead is wound around a bus-bar assembly according to an embodiment of the present disclosure.
FIG. 12 is a cross-sectional perspective view of a bus-bar assembly according to another embodiment of the present disclosure.
FIG. 13 is a drawing illustrating the inside of a battery module according to an embodiment of the present disclosure.
FIG. 14 is a cross-sectional view of a battery module including a bus-bar assembly when viewed from above according to an embodiment of the present disclosure, which may be a cross-sectional view, for example, taken along line I - I' in FIG. 1.
FIG. 15 is a drawing illustrating a state in which bus-bar assemblies are separated from each other according to an embodiment of the present disclosure.
FIG. 16 is a schematic perspective view of a battery pack including a battery module according to an embodiment of the present disclosure.
FIG. 17 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position, arrangement, or rotation of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

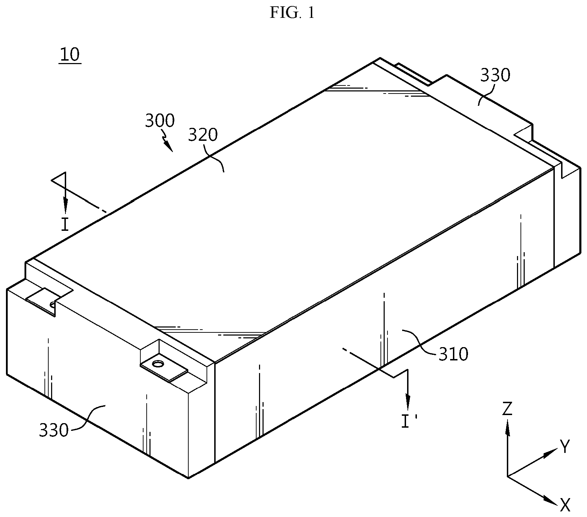

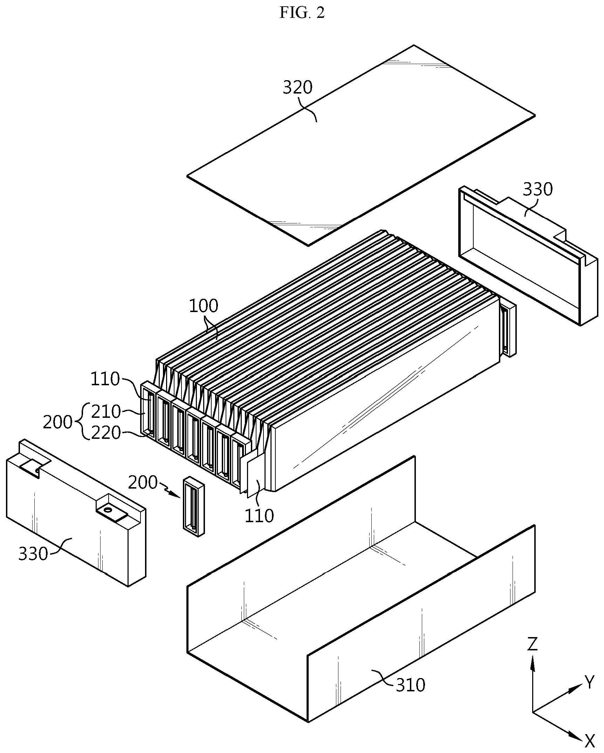

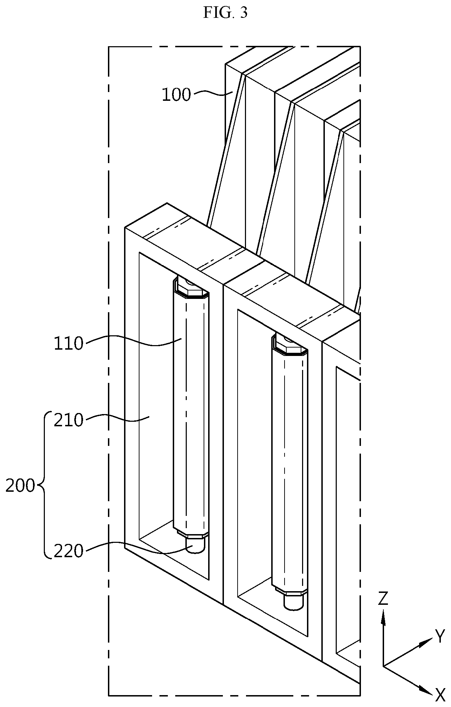

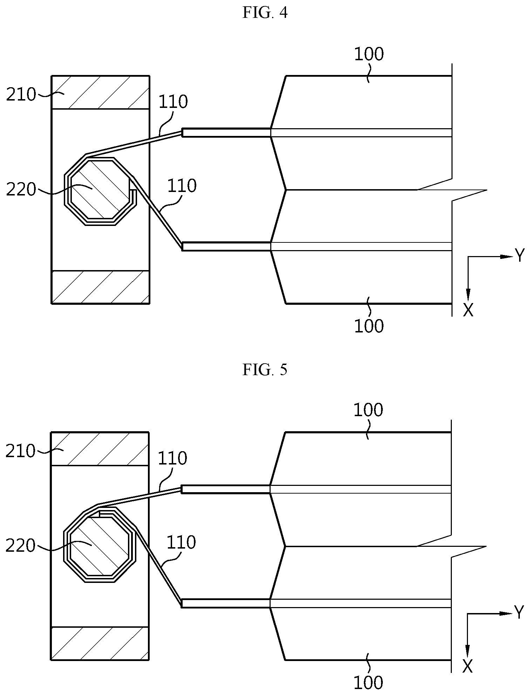

FIG. 1 is an overall perspective view of a battery module according to an embodiment of the present disclosure, and FIG. 2 is an exploded perspective view of a battery module according to an embodiment of the present disclosure. In addition, FIG. 3 is a drawing illustrating a bus-bar assembly to which electrode leads are coupled in a battery module according to an embodiment of the present disclosure, and FIG. 4 is a cross-sectional view of a bus-bar assembly to which electrode leads are coupled in a battery module according to an embodiment of the present disclosure.

Referring to FIGS. 1 to 4, a battery module 10 according to an embodiment of the present disclosure includes a battery cell 100 and a bus-bar assembly 200.

A plurality of battery cells 100 may be provided. The plurality of battery cells 100 may be provided to be stacked in one direction. For example, as shown in FIG. 2, the plurality of battery cells 100 may be stacked along the left-right direction (X-axis direction).

The battery cell 100 may be a pouch-type secondary battery. The battery cell 100 may include an electrode assembly and a cell case that stores the electrode assembly. The cell case may have a receiving portion configured to store the electrode assembly, and a sealing portion formed by heat-fusing the edges of the receiving portion. The sealing portion may be provided on three of the four edges of the battery cell 100.

In addition, each of the plurality of battery cells 100 may have an electrode lead 110. The electrode lead 110 may be connected to the electrode assembly, and may extend to the outside of the cell case, functioning as an electrode terminal.

A pair of electrode leads 110 may be provided, and the pair of electrode leads 110 may extend outward from both ends of the battery cell 100, i.e., in the longitudinal direction (±Y-axis directions) thereof. In this case, the pair of electrode leads 110 may be a positive electrode lead and a negative electrode lead. The battery cell 100 may be configured such that two electrode leads 110 are located only at one end in the Y-axis direction, for example, at the end in the +Y-axis direction, as necessary.

The battery cell 100 may be provided to stand with the edge, which does not include the sealing portion, facing downward. As illustrated in FIG. 2 and other drawings, the plurality of battery cells 100 may be disposed side by side in the left-right direction (X-axis direction) while standing in the vertical direction (Z-axis direction). In this case, each battery cell 100 may have the sealing portions facing in the front-back direction (Y-axis direction) and the upward direction (+Z-axis direction), and the receiving portion facing in the left-right direction (X-axis direction).

The present disclosure is not limited to a specific type or shape of the battery cell 100, and various battery cells 100 known at the time of filing the present disclosure may be applied to configure the stack of the battery cells 100 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The bus-bar assembly 200 may be provided on at least one side of the plurality of battery cells 100. In the present embodiment, as shown in FIG. 2, the bus-bar assembly 200 may be coupled to the front and rear sides of the plurality of battery cells 100.

The bus-bar assembly 200 according to an embodiment of the present disclosure may include a housing 210 and a bus-bar 220. The housing 210 may be provided on at least one side of the plurality of battery cells 100. The housing 210 may be made of a material having electrical insulation properties, such as plastic.

The bus-bar 220 may be electrically connected to at least a portion of the electrode lead 110. The bus-bar 220 may be a means for connecting the battery cells 100 in series and/or in parallel. In addition, through this electrical connection, the bus-bar 220 may be configured to transmit status information about the battery cells 100 to an external component. For example, the bus-bar 220 may be configured to transmit voltage information of the battery cell 100 to an external control device such as a BMS (Battery Management System).

The bus-bar 220 may be made of an electrically conductive material for transmitting an electrical signal. For example, the bus-bar 220 may be made of a material such as copper, aluminum, or nickel.

The bus-bar 220 may be provided in the housing 210. For example, the bus-bar 220 may be configured to be coupled to the housing 210.

The bus-bar 220 may come into contact with the electrode lead 110 to be electrically connected thereto. In this case, the bus-bar 220 may be located inside the electrode lead 110. The electrode lead 110 may be configured at least partially to be in surface-contact with the outer circumferential surface of the bus-bar 220.

In particular, as disclosed in the embodiments illustrated in FIGS. 3 and 4, the bus-bar 220 may be configured such that the electrode lead 110 is wound around and coupled to the outer circumferential surface thereof. The electrode lead 110 may be configured to be wrapped or wound around the outer circumferential surface of the bus-bar 220. For example, the electrode lead 110 may be configured to extend out in the -Y-axis direction and to be wound in the stacking direction (X-axis direction) of the battery cells 100 to surround the bus-bar 220.

The electrode lead 110 may be configured such that the end thereof is wound around the outer circumferential surface of the bus-bar 220. Accordingly, portions of the electrode leads 110 of the battery cells 100 may be wound around the outer circumferential surface of the bus-bar 220 to be coupled thereto, and the remaining portions may be provided outside the housing 210.

In this case, the electrode lead 110 may be configured to wrap around at least a portion of the outer circumferential surface of the bus-bar 220. That is, the electrode lead 110 may be configured to wrap around the entire outer circumferential surface of the bus-bar 220, or may be configured to wrap around only a portion of the outer circumferential surface of the bus-bar 220.

According to the above-implemented configuration of the present disclosure, since the electrode lead 110 of the battery cell 100 is wound around and coupled to the bus-bar 220, a cutting process for adjusting the length of the electrode lead 110 and a welding process may be omitted when coupling the electrode lead 110 to the bus-bar 220, thereby simplifying the process. Therefore, the cost and time may be reduced, and the productivity may be improved in manufacturing the battery module 10.

In addition, according to the above-implemented configuration of the present disclosure, the area where the bus-bar 220, which is a conductor, is exposed to the outside may be minimized, so that the generation of a short circuit may be suppressed.

The battery module 10 according to an embodiment of the present disclosure may include a module case 300. Referring to FIGS. 1 and 2, the module case 300 may have an inner space formed therein, and may store the battery cells 100 in the inner space. The module case 300 may include a case body 310, a top plate 320, and an end plate 330.

Specifically, as shown in the drawing of the present disclosure, the case body 310 may be configured as a U-frame. In the case where the case body 310 is configured as a U-frame, it may be provided to cover both sides and a lower side of the cell assembly 100. The case body 310 may include a left plate and a right plate covering both sides of the cell assembly 100, and a lower plate covering the lower side of the cell assembly 100. In addition, the left plate, right plate, and lower plate may be configured as an integrated form. In this case, the case body 310 may have an upper opening and front and rear openings.

In the case where the case body 310 is configured as a U-frame, a top plate 320 may be further included to be coupled to cover the upper opening of the case body 310. The top plate 320 may be welded to the case body 310. In this case, the top plate 320 and the case body 310 may be coupled to each other into a square tube with front and rear openings.

The case body 310 may be made of a metal material having rigidity and heat resistance in order to physically or chemically protect the stored battery cells 100.

In addition, the module case 300 may be formed in various other shapes. For example, the module case 300 may be configured as a mono-frame. For example, the case body 310 may be configured in the shape of a square tube having an upper surface, a lower surface, a left surface, and a right surface, and having front and back openings.

The end plate 330 may be provided on the front and rear openings of the case body 310. The end plate 330 may be welded to the case body 310. Alternatively, the end plate 330 may be formed integrally with the case body 310.

In addition, the end plate 330 may be configured such that, for example, an inner surface is made of an insulating material and an outer surface is made of a metal material. In addition, the end plate 330 may be partially provided with holes or slits for exposing components that are required to be exposed to the outside, such as a positive electrode terminal and negative electrode terminal or a connector of the battery module 10.

The end plate 330 may be configured to be in contact with the bus-bar assembly 200. Alternatively, the end plate 330 may be provided to be spaced a predetermined distance apart from the bus-bar assembly 200. However, in the battery module 10 according to an embodiment of the present disclosure, since the bus-bar 220 is configured to be stored inside the housing 210, the end plate 330 may be provided closer to the bus-bar assembly 200 than in the conventional battery module.

According to the above-implemented configuration of the present disclosure, space may be secured on the side where the bus-bar assembly 200 is provided, so that the space utilization may be increased in the module case 300. Accordingly, the energy efficiency of the battery module 10 may be maximized.

Meanwhile, a venting hole H may be configured in the module case 300, which may enable directional venting to one direction. For example, a plurality of venting holes H may be formed on the top plate 320, and directional venting toward the top of the battery module 10 may be possible through the venting holes H.

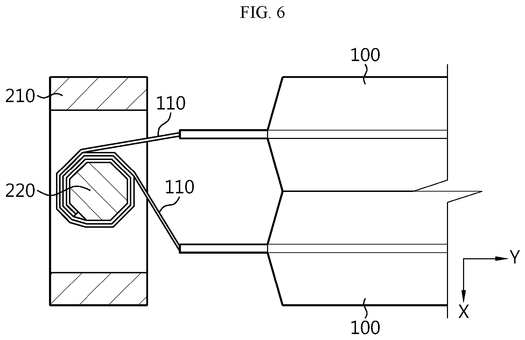

FIG. 5 is a cross-sectional view of a bus-bar assembly to which electrode leads are coupled in a battery module according to another embodiment of the present disclosure, and FIG. 6 is a cross-sectional view of a bus-bar assembly to which electrode leads are coupled in a battery module according to another embodiment of the present disclosure.

The electrode lead 110 may be configured to wrap around the outer circumferential surface of the bus-bar 220 at least once. For example, as disclosed in the embodiment illustrated in FIG. 5, the electrode lead 110 may be configured to wrap around the outer circumferential surface of the bus-bar 220 once. That is, the electrode lead 110 may be configured to wrap around the outer circumferential surface of the bus-bar 220 at approximately 360 degrees.

Alternatively, as disclosed in the embodiment illustrated in FIG. 6, the electrode lead 110 may be configured to wrap around the outer circumferential surface of the bus-bar 220 multiple times. That is, the electrode lead 110 may be configured to wrap around the outer circumferential surface of the bus-bar 220 at approximately 360 degrees or more. In this case, the end of the electrode lead 110 may be configured to be wound around the outer circumferential surface of the bus-bar 220 to overlap itself multiple times.

According to the above-implemented configuration of the present disclosure, since the electrode lead 110 is configured to wrap around the outer circumferential surface of the bus-bar 220 at least once from the outside of the bus-bar 220, the area where the electrode lead 110 comes into contact with the bus-bar 220 may be increased. Therefore, the contact between the electrode lead 110 and the bus-bar 220 may be maintained more stably.

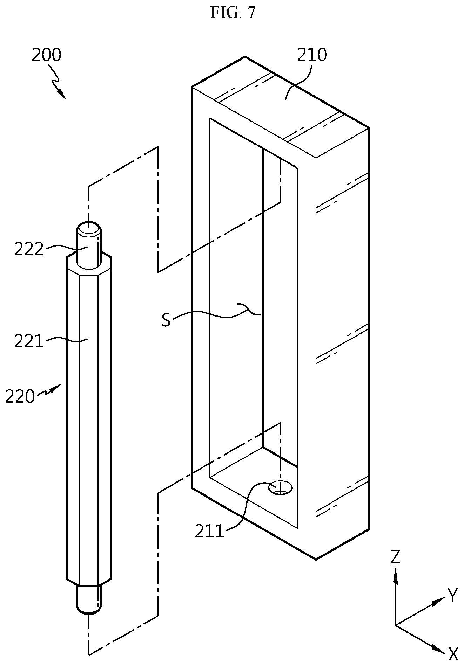

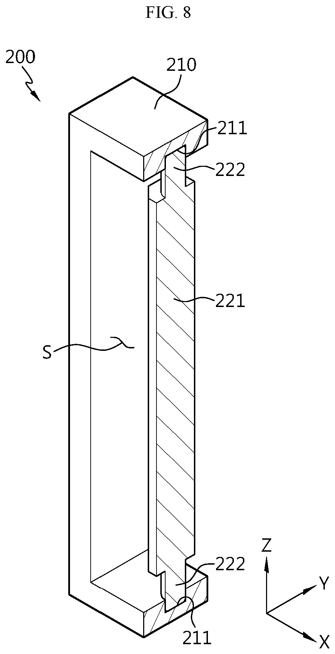

FIG. 7 is an exploded perspective view of a bus-bar assembly according to an embodiment of the present disclosure, and FIG. 8 is a cross-sectional perspective view of a bus-bar assembly according to an embodiment of the present disclosure.

The structure of the bus-bar assembly 200 according to an embodiment of the present disclosure will be described in more detail with reference to FIGS. 7 and 8. As described above, the bus-bar 220 may be provided in the housing 210 and configured to be coupled to the housing 210. In this case, the housing 210 may be made of an electrically insulating material to be insulated from the bus-bar 220.

According to an embodiment, as shown in FIG. 7, the housing 210 may have a storage space S formed to store the bus-bar 220. The housing 210 may be configured to have an opening toward the battery cell 100. For example, the housing 210 may be configured in the shape of a frame having openings on both sides. Alternatively, the housing 210 may be configured in a cuboid shape having an opening on one side.

In addition, referring to FIGS. 7 and 8, the housing 210 may have a coupling portion 211 configured such that the bus-bar 220 is to be coupled thereto. The coupling portion 211 may be configured in the storage space S. The coupling portion 211 may be provided on the inner surface of the housing 210. In addition, the coupling portion 211 may be provided on both sides of the housing 210 in the vertical direction.

As described in the above embodiment of the present disclosure, since the bus-bar 220 is coupled to the storage space S so that the bus-bar 220 is provided inside the housing 210, the exposure of the bus-bar 220 to the outside of the housing 210 may be minimized. Therefore, the generation of a short circuit between the bus-bar 220 and other components may be suppressed.

The bus-bar 220 may be configured to have one central axis formed therein. For example, as disclosed in the embodiment illustrated in FIGS. 7 and 8, the bus-bar 220 may be configured in a columnar shape. The bus-bar 220 may be configured to extend in the widthwise direction (Z-axis direction in FIGS. 7 and 8) of the electrode lead 110. In this case, both ends of the bus-bar 220 in the vertical direction may be coupled to the coupling portions 211 of the housing 210.

The bus-bar 220 may be configured in the form of a cylindrical column or a polygonal column. In particular, in the case where the bus-bar 220 is configured as a polygonal column such as an octagonal column as disclosed in the embodiment illustrated in FIGS. 7 and 8, the area where the end of the electrode lead 110 is in contact with one surface of the polygonal column of the bus-bar 220 may be secured to the maximum extent during the process of winding the electrode lead 110 around the outer circumferential surface of the bus-bar 220. Accordingly, the bonding force or fixing force between the bus-bar 220 and the electrode lead 110 may be secured.

More specifically, the bus-bar 220 may include a contact part 221 and a shaft part 222. The contact part 221 and the shaft part 222 may be configured to have the same central axis. The contact part 221 may be a part where the electrode lead 110 is coupled. The shaft part 222 may be a part coupled to the housing 210. The shaft part 222 may be configured to extend from the contact part 221. The shaft part 222 may be provided at both ends of the bus-bar 220 in the longitudinal direction and configured to be coupled to the coupling portion 211 of the housing 210.

The bus-bar 220 may be configured to be rotatable. Specifically, the bus-bar 220 may be configured to rotate in one direction so that the electrode lead 110 is wound around its outer circumferential surface in one direction. The one direction may be the same direction as the direction in which the electrode lead 110 extends from the battery cell 100. For example, in the case where the electrode lead 110 extends from the battery cell 100 in the Y-axis direction and is located on the right of the bus-bar 220, the bus-bar 220 may rotate clockwise, so that the electrode lead 110 may be wound around it.

According to the above-implemented configuration of the present disclosure, the electrode leads 110 may be wound around the outer circumferential surface of the bus-bar 220 by rotating the bus-bar 220, regardless of the lengths of the electrode leads 110, so that they may be connected to each other. Accordingly, a cutting process of the electrode lead 110 may be omitted.

In addition, according to the above-implemented configuration of the present disclosure, since the electrode lead 110 is wound around the outer circumferential surface of the bus-bar 220 to be fixed to the bus-bar 220, a welding process for fixing the electrode lead 110 to the bus-bar 220 may be omitted. As a result, according to the above-implemented configuration of the present disclosure, productivity may be improved when manufacturing the battery module 10 or bus-bar assembly 200.

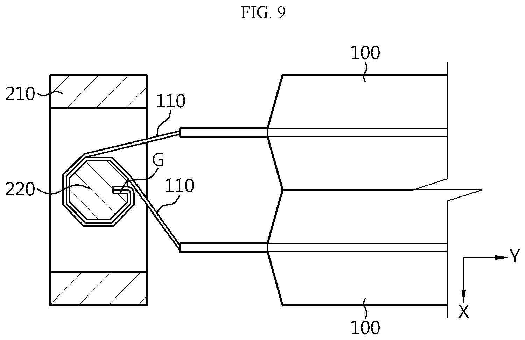

FIG. 9 is a cross-sectional view of a bus-bar assembly according to another embodiment of the present disclosure.

The bus-bar 220 may be configured such that the end of the electrode lead 110 is fixed thereto. According to the above-implemented configuration of the present disclosure, when the electrode lead 110 is wound around the outer circumferential surface of the bus-bar 220 as the bus-bar 220 rotates, the contact between the electrode lead 110 and the bus-bar 220 may be stably maintained.

For example, the end of the electrode lead 110 may be bonded to the bus-bar 220. An adhesive material such as an adhesive or tape may be provided between the electrode lead 110 and the bus-bar 220.

Alternatively, in order to further enhance the fixing force between the electrode lead 110 and the bus-bar 220, the bus-bar 220 may be configured such that the end of the electrode lead 110 is at least partially inserted thereto. More specifically, as disclosed in the embodiment illustrated in FIG. 9, the bus-bar 220 may have a fixing groove G. The fixing groove G may be configured to be recessed inward from the outer circumferential surface of the contact part 221 of the bus-bar 220 such that the end of the electrode lead 110 is inserted thereto. The size of the fixing groove G may be configured to correspond to the thickness of the electrode lead 110.

According to the above-implemented configuration of the present disclosure, since the fixing force between the electrode lead 110 and the bus-bar 220 is further improved, the electrode lead 110 may be prevented from being separated from the bus-bar 220 during the process of winding the electrode lead 110 by rotating the bus-bar 220. In addition, according to the above-implemented configuration of the present disclosure, the end of the electrode lead 110 may be fixed to the bus-bar 220 without a separate adhesive member, thereby reducing the cost and time when manufacturing the bus-bar assembly 200 or the battery module 10, and improving the productivity.

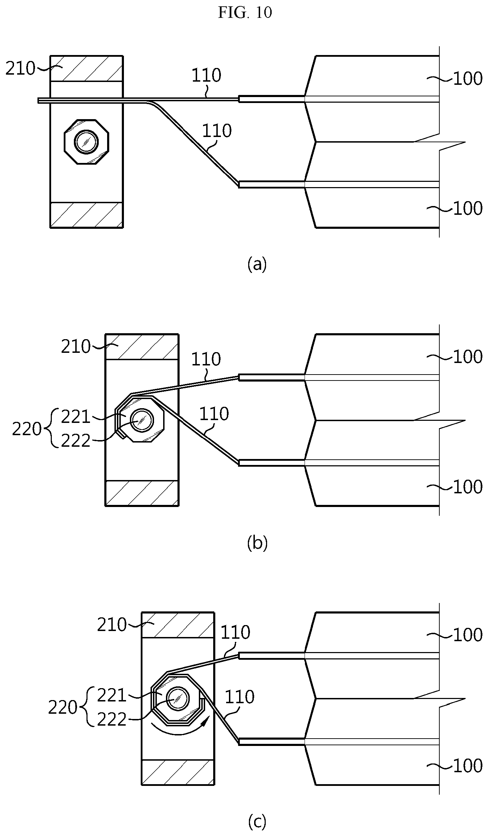

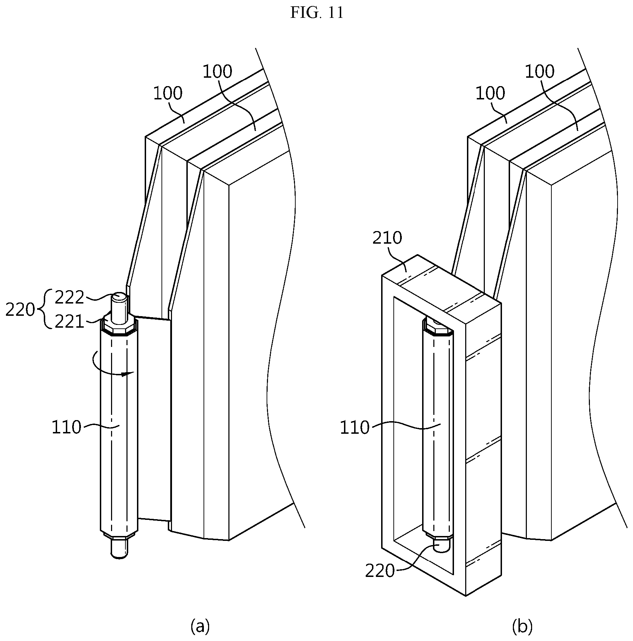

Hereinafter, a process of winding the electrode lead 110 around the bus-bar assembly 200 according to an embodiment of the present disclosure will be described in detail with reference to FIGS. 10 and 11.

FIG. 10 is a drawing illustrating an embodiment in which an electrode lead is wound around a bus-bar assembly according to an embodiment of the present disclosure.

Referring to FIG. 10, the bus-bar 220 may be rotatably coupled to the housing 210. The bus-bar 220 may be configured to be rotatable while being mounted to the housing 210.

As an example, as shown in FIG. 10(a), the bus-bar assembly 200 with the bus-bar 220 mounted to the housing 210 may be positioned to the side of the battery cell 100. In this case, the electrode lead 110 may pass through the housing 220 and extend to the outside.

Next, as shown in FIG. 10(b) and FIG. 10(c), after fixing the end of the electrode lead 110 to the bus-bar 220, the bus-bar 220 may be rotated so that the electrode lead 110 is wound around the outer circumferential surface of the bus-bar 220. More specifically, in the case where the end of the electrode lead 110 is fixed or bonded to the contact part 221 of the bus-bar 220, the shaft part 222 may be exposed to the outside of the electrode lead 110. In this case, the shaft part 222 exposed to the outside of the electrode lead 110 may serve as a handle for rotating the bus-bar 220. Accordingly, when the shaft part 222 is gripped and rotated in one direction, the electrode lead 110 may be wound along one direction.

FIG. 11 is a drawing illustrating another embodiment in which an electrode lead is wound around a bus-bar assembly according to an embodiment of the present disclosure.

Unlike the above embodiment, the electrode lead 110 may be wound around the outer circumferential surface of the bus-bar 220 in the outside of the housing 210. More specifically, as shown in FIG. 11(a), the electrode lead 110 may be preferentially fixed to the outer circumferential surface of the bus-bar 220, and the bus-bar 220 may be rotated in one direction so that the electrode lead 110 is wound around the outer circumferential surface. In addition, as shown in FIG. 11(b), the bus-bar 220 where the electrode lead 110 is wound may be coupled to the housing 210. The bus-bar 220 may be inserted into the storage space S through the opening of the housing 210.

In this case, although not shown in the drawing, the housing 210 may have an insertion groove into which the bus-bar 220 may be inserted through the opening.

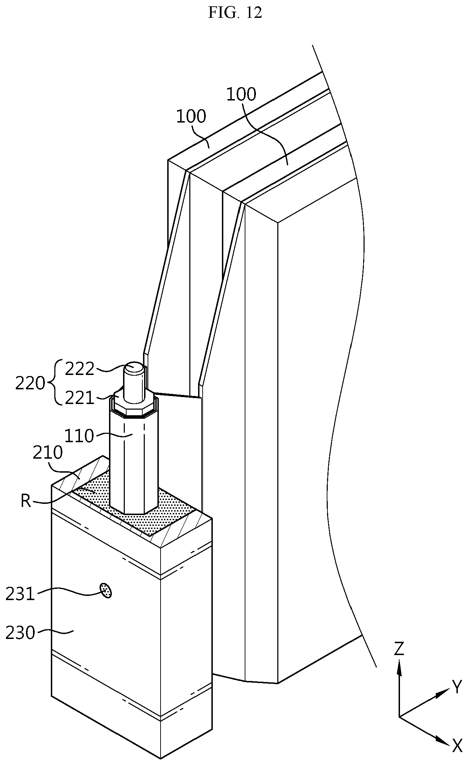

FIG. 12 is a cross-sectional perspective view of a bus-bar assembly according to another embodiment of the present disclosure.

Referring to FIG. 12, the bus-bar assembly 200 according to an embodiment of the present disclosure may further include a filler R. The filler R may be configured to be filled in the storage space S of the housing 210.

The filler R may be made of a material having electrical insulation properties. For example, the filler R may be formed of a material such as resin or foam.

The filler R may be configured to fix the electrode lead 110 wound around the bus-bar 220 after a predetermined period of time passes after being injected. In addition, the filler R may be configured to improve the bonding strength between the bus-bar 220 and the housing 210. According to the above-implemented configuration of the present disclosure, the structural stability of the bus-bar assembly 200 may be secured.

In addition, the filler R may be configured to cover the bus-bar 220. According to the above-implemented configuration of the present disclosure, the bus-bar 220 may be completely prevented from being exposed to the outside, thereby minimizing the generation of a short circuit.

Meanwhile, in order to prevent the filler R from leaking out from the storage space S, the housing 210 may further include a cover 230. The cover 230 may be coupled to the outer surface of the housing 210. The cover 230 may be provided on the opposite side of the battery cell 100.

The cover 230 may have an injection hole 231 through which the filler R may be injected. The filler R may be injected through the injection hole 231. A plurality of injection holes 231 may be provided on the cover 230.

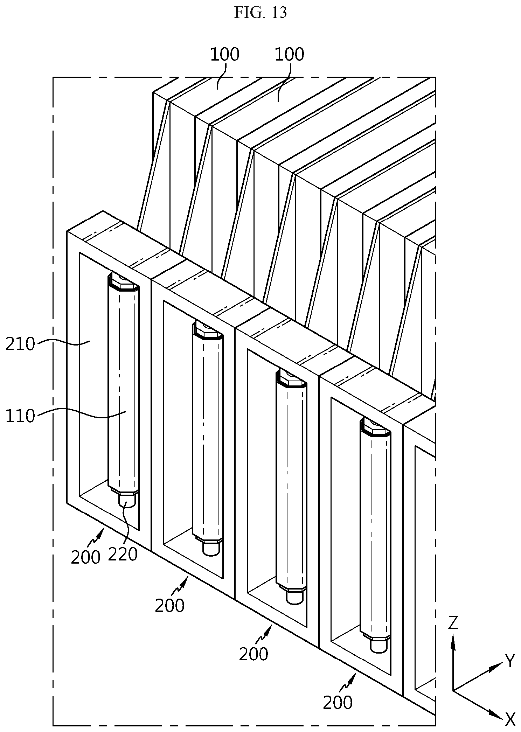

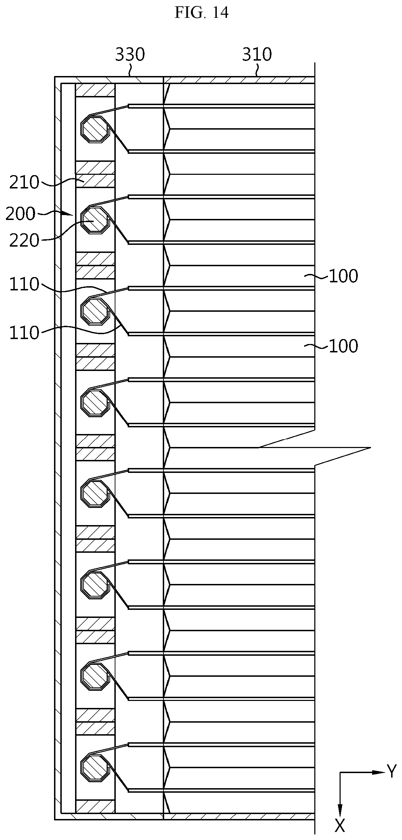

FIG. 13 is a drawing illustrating the inside of a battery module according to an embodiment of the present disclosure. In addition, FIG. 14 is a cross-sectional view of a battery module including a bus-bar assembly when viewed from above according to an embodiment of the present disclosure, which may be a cross-sectional view, for example, taken along line I - I' in FIG. 1.

In a battery module 10 according to an embodiment of the present disclosure, a plurality of bus-bar assemblies 200 may be provided. That is, a plurality of housings 210 and bus-bars 220 may be configured. The plurality of bus-bar assemblies 200 may be configured to cover at least one side of the battery cell 100. For example, the plurality of bus-bar assemblies 200 may be configured to cover the front and rear sides of the battery cell 100.

The plurality of housings 210 may be disposed along one direction. For example, as disclosed in the embodiments illustrated in FIGS. 13 and 14, the plurality of housings 210 may be arranged along the stacking direction of the battery cell 100.

In this case, the electrode lead 110 of the battery cell 100 may be configured to extend to the outside of the bus-bar assembly 200 through the space between adjacent housings 210. More specifically, a plurality of electrode leads 110 may be provided to correspond to the plurality of battery cells 100, and at least some of the plurality of electrode leads 110 may pass through the space between adjacent housings 210, and may be bent and wound around the outer circumferential surface of the bus-bar 220. This structure enables an electrical connection between the plurality of battery cells 100 whose electrode leads 110 are in contact with each other.

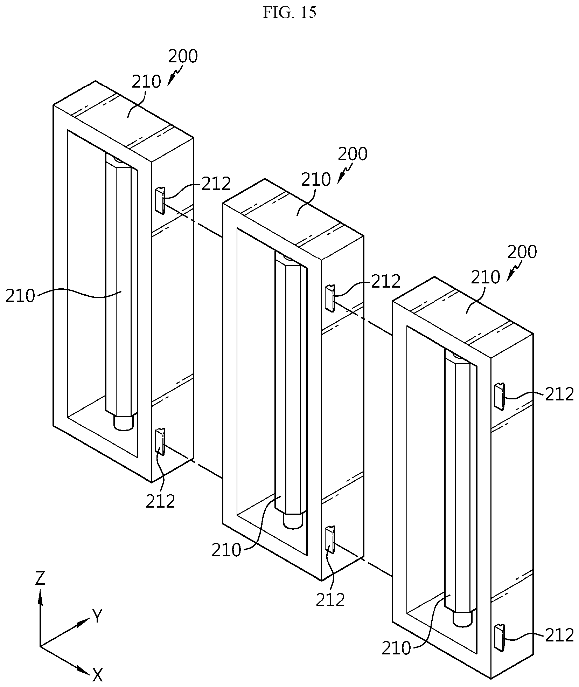

FIG. 15 is a drawing illustrating a state in which bus-bar assemblies are separated from each other according to an embodiment of the present disclosure.

The plurality of housings 210 may be configured to be fastened to each other. As a result, the plurality of bus-bar assemblies 200 may form a single frame. When manufacturing the battery module 10, the battery cells 100 and the housings 210 may be alternately disposed to couple the housings 210 to each other. Alternatively, a plurality of housings 210 may be preferentially coupled to each other and then disposed on one side of the battery cells 100 to connect the electrode leads 110 to the bus-bar 220.

More specifically, the housing 210 may have a fixing structure 212 configured to be fastened to each other. The fixing structure 212 may be configured to restrain the movement of the housings 210 coupled to each other. The fixing structure 212 may be configured as a male-female coupling structure.

As an example, a hook may be formed to protrude outward from at least one side of the housing 210. For example, as illustrated in FIG. 15, two protruding hooks may be formed on one side of the housing 210.

In addition, a groove may be formed on at least one side of the housing 210 such that the hook is inserted thereinto. In addition, the groove may be formed similar (identical) as the size of the outer surface of the hook, or may be formed slightly larger than that.

According to an embodiment of the present disclosure, the hook may be inserted into the groove to form a fixing structure 212. Therefore, according to this configuration of the present disclosure, by providing a forced-fitting coupling structure for restricting the movement of the housings 210 relative to each other, the housings 210 may be moved closer to each other and simply fastened by pressurization. Furthermore, separate welding for bonding the plurality of housings 210 to each other may be unnecessary. Accordingly, the manufacturing method of the battery module 10 may be simplified, which has the advantage of greatly increasing the manufacturing efficiency.

In addition, the movement of the plurality of coupled housings 210 relative to each other may be further restricted in the up-down direction and the left-right direction, thereby effectively preventing the plurality of housings 210 from being separated from each other.

Meanwhile, the fixing structure 212 of the housing 210 is not limited to the above embodiment, and may be configured in various structures, such as a trim-pin structure, capable of coupling the plurality of housings 210 to each other without welding.

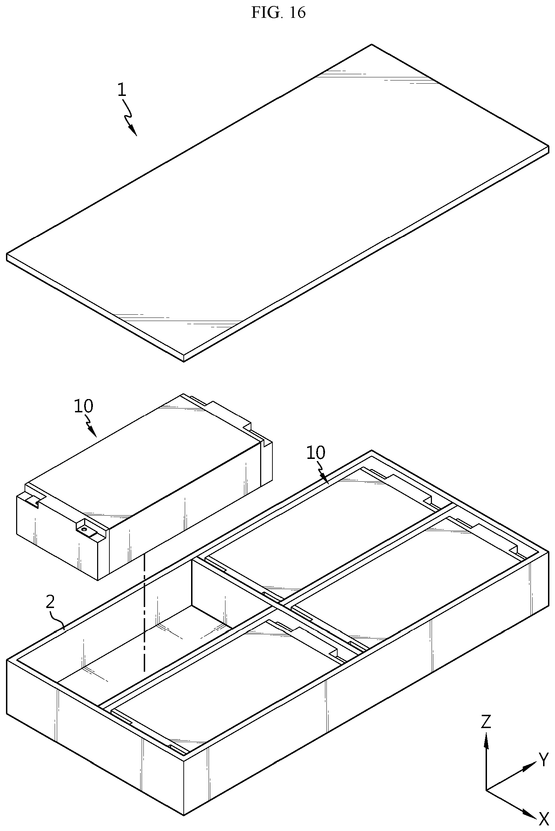

FIG. 16 is a schematic perspective view of a battery pack including a battery module according to an embodiment of the present disclosure.

Referring to FIG. 16, a battery pack 1 according to an embodiment of the present disclosure may include one or more battery modules 10 according to an embodiment of the present disclosure described above. The battery pack 1 according to the present disclosure may further include a pack case 21 for storing a BMS, a current sensor, a fuse, or the like for integrated control of charging and discharging of one or more battery modules, and the components described above.

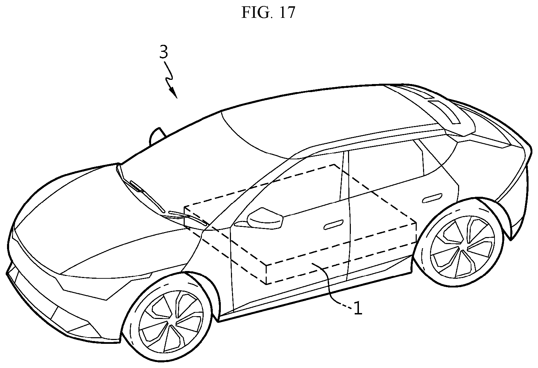

FIG. 17 is a schematic perspective view of a vehicle including a battery pack according to an embodiment of the present disclosure.

Referring to FIG. 17, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 may include a four-wheel vehicle and a two-wheel vehicle. The vehicle 3 may be operated by power supplied from the battery pack 1 or the battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells each having an electrode lead; and
a bus-bar assembly comprising a housing provided on at least one side of the plurality of battery cells, and a bus-bar provided in the housing and configured such that the electrode lead is wound around and coupled to an outer circumferential surface thereof .

2. The battery module according to claim 1,
wherein the electrode lead is configured to wrap around the outer circumferential surface of the bus-bar at least once.

3. The battery module according to claim 1,
wherein the housing has a storage space formed to store the bus-bar.

4. The battery module according to claim 1,
wherein the bus-bar is configured in a shape of a column extending in a widthwise direction of the electrode lead.

5. The battery module according to claim 1,
wherein the bus-bar has
a contact part to which the electrode lead is coupled, and
a shaft part extending from the contact part and configured to be coupled to the housing.

6. The battery module according to claim 1,
wherein the bus-bar is configured to be rotatable.

7. The battery module according to claim 1,
wherein the bus-bar is configured such that an end of the electrode lead is fixed thereto.

8. The battery module according to claim 1,
further comprising a filler configured to be filled in the storage space of the housing.

9. The battery module according to claim 1,
wherein a plurality of housings are provided to be arranged along a stacking direction of the plurality of battery cells.

10. The battery module according to claim 9,
wherein the plurality of housings are configured to be fastened to each other.

11. A battery pack comprising a battery module according to any one of claims 1 to 10.

12. A vehicle comprising a battery module according to any one of claims 1 to 10.

13. A bus-bar assembly configured to be electrically connected to an electrode lead of a battery cell, the bus-bar assembly comprising:
a housing; and
a bus-bar provided in the housing and having the electrode lead wound around and coupled to an outer circumferential surface thereof.
